# EUROPEAN PATENT APPLICATION

(11) **EP 2 429 142 A1**
(43) Date of publication of application: **14.03.2012**
(21) Application number: 10772028.6
(22) Date of filing: 06.05.2010
(51) Int. Cl.: H04L 29/06

(54) **SEATS PROCESSING METHOD, EXCHANGE AND CALL CENTER**

(30) Priority: 06.05.2009 CN 200910136529
(71) Applicant: Huawei Technologies Co., Ltd., Shenzhen, Guangdong 518129 (CN)
(72) Inventor: ZHENG, Xiaosheng, Shenzhen Guangdong 518129 (CN); KANG, Xiaohong, Shenzhen Guangdong 518129 (CN)
(74) Representative: Pfenning, Meinig & Partner GbR
(86) International application number: PCT/CN2010/072476
(87) International publication number: WO 2010/127625

(57) **Abstract**

Embodiments of the present invention disclose an agent processing method, a switch and a call center, and relate to the communication field. The method includes: receiving, by a switch, a message sent by a computer telecommunication integration server CTI, where the message includes agent logged on information or agent logged off information, and synchronizing an agent queue of the switch according to the agent logged on information or the agent logged off information; and monitoring, by the switch, a connection state between the switch and the CTI, and processing a call reaching the switch according to the agent queue stored in the switch when the connection state between the switch and the CTI is disconnected. The switch includes: a receiving module, a storage module, a monitoring module and a first processing module. According to the solutions provided in the embodiments of the present invention, the problem that the CTI is unable to process the agent after a communication fault, and a total breakdown occurs in call center services before the services between the CTI and the switch are restored is solved.

## Description

This application claims priority to Chinese Patent Application No. 200910136529.5, filed with the Chinese Patent Office on May 6, 2009 and entitled "AGENT PROCESSING METHOD, SWITCH AND CALL CENTER", the contents of which are all incorporated herein by reference in their entireties.

### FIELD OF THE INVENTION

The present invention relates to the communication field, and in particular, to an agent processing method, a switch and a call center.

### BACKGROUND OF THE INVENTION

A CSTA (Computer Supported Telecommunications Applications, computer supported telecommunication applications) technology defines an overall structure, requirements and a protocol for an integrated computer and a telecommunication network platform. In a CSTA environment, a CTI (Computer Telecommunication Integration, computer telecommunication integration) server (hereinafter referred to as CTI) can implement management and control of an agent state, and further implements specific functions such as access, queuing, and routing of a call in coordination with a SoftACD (Soft Automatic Call Distribution, soft automatic call distribution device or switch, hereinafter referred to as switch).

In the prior art, the CTI server sets a SoftACD (Automatic Call Distribution, automatic call distribution) device in the switch to be a routing point, monitors an agent device in the switch, and logs the agent on the SoftACD device in the switch through an agent management system in the CTI server. When a call reaches the routing point, the switch reports a routing request message to the CTI server, and the CTI server distributes an agent for the call according to an internal agent management mechanism and delivers the selected agent to the switch through a routing selection message. Afterwards, the switch transfers the call to the agent. In the foregoing process, the distribution of the agent is implemented by the CTI server.

In a call center application process, communication disconnection may occur between the CTI server and the switch due to an unstable network environment, a software fault in the CTI server or a natural disaster, and the disconnection state may not be restored in a short term. Only when connection is recreated between the CTI server and the switch, the CTI platform redelivers monitoring information to all the agent devices, and resets the SoftACD device in the switch to be the routing point, the call center services may be restored.

### SUMMARY OF THE INVENTION

Accordingly, embodiments of the present invention provide an agent processing method, a switch and a call center. The technical solutions are as follows.

An agent processing method includes:
receiving, by a switch, a message sent by a computer telecommunication integration server CTI, where the message includes agent logged on information or agent logged off information;
synchronizing, by the switch, an agent queue of the switch according to the agent logged on information or the agent logged off information;
monitoring, by the switch, a connection state between the switch and the CTI; and
processing, by the switch, a call reaching the switch according to the agent queue stored in the switch when the connection state between the switch and the CTI is disconnected.

A switch includes a receiving module, a storage module, a monitoring module and a first processing module.

The receiving module is configured to receive a message sent by a CTI, where the message includes agent logged on information or agent logged off information.

The storage module is configured to synchronize an agent queue according to the agent logged on information or the agent logged off information.

The monitoring module is configured to monitor a connection state between the switch and the CTI.

The first processing module is configured to process a call reaching the switch according to an agent state in the agent queue stored in the storage module when the connection state between the switch and the CTI is disconnected.

A call center includes a switch and a computer telecommunication integration server CTI.

The switch is configured to receive a message sent by a CTI, where the message includes agent logged on information or agent logged off information, synchronize an agent queue of the switch according to the agent logged on information or the agent logged off information, monitor a connection state between the switch and the CTI, and process a call reaching the switch according to an agent state stored in the switch when the connection state between the switch and the CTI is disconnected.

The beneficial effects of the technical solution provided by the embodiments of the present invention are as follows.

The switch synchronizes the agent queue of the switch according to the agent logged on information or the agent logged off information, monitors the state between the switch and the CTI, and processes the call reaching the switch according to the agent queue stored in the switch when the connection state between the switch and the CTI is disconnected, thereby solving the problem that the CTI is unable to process the agent after a communication fault, and a total breakdown occurs in the call center services before the services between the CTI and the switch are restored.

### BRIEF DESCRIPTION OF THE DRAWINGS

To illustrate the technical solutions in the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art may also obtain other drawings according to these accompanying drawings without creative efforts.
FIG. 1 is a flow chart of an agent processing method according to Embodiment 1 of the present invention;
FIG. 2 is a flow chart of initialization of a call center according to Embodiment 2 of the present invention;
FIG. 3 is a flow chart of an agent processing method when a call center is in a normal operation state according to Embodiment 2 of the present invention;
FIG. 4 is a flow chart of an agent processing method when a call center is in a fault state according to Embodiment 2 of the present invention;
FIG. 5 is a schematic structure diagram of a switch according to Embodiment 3 of the present invention; and
FIG. 6 is a schematic structure diagram of a call center according to Embodiment 4 of the present invention.

### DETAILED DESCRIPTION OF THE EMBODIMENTS

The technical solutions in embodiments of the present invention are clearly and completely described in the following with reference to the accompanying drawings in the embodiments of the present invention. Apparently, the embodiments to be described are only a part rather than all of the embodiments of the present invention. All other embodiments obtained by persons of ordinary skilled in the art based on the embodiments of the present invention without creative efforts shall fall within the protection scope of the present invention.

### Embodiment 1

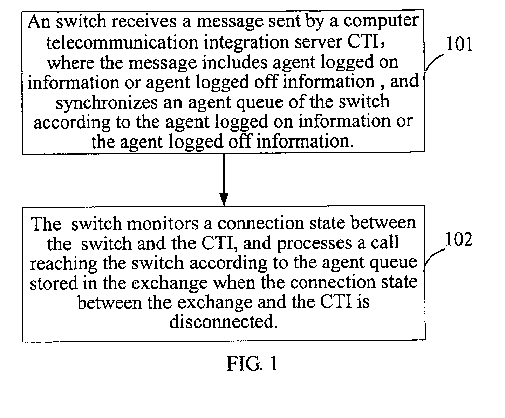

FIG. 1 is a flow chart of an agent processing method according to an embodiment of the present invention. Referring to FIG. 1, where the method includes the following:
101: A switch receives a message sent by a CTI, where the message includes agent logged on information or agent logged off information, and synchronizes an agent queue of the switch according to the agent logged on information or the agent logged off information.
102: The switch monitors a connection state between the switch and the CTI, and processes a call reaching the switch according to the agent queue stored in the switch when the connection state between the switch and the CTI is disconnected.

In the embodiment of the present invention, the switch synchronizes the agent queue of the switch according to the agent logged on information or the agent logged off information, monitors the state between the switch and the CTI, and processes the call reaching the switch according to the agent queue stored in the switch when the connection state between the switch and the CTI is disconnected, thereby solving the problems that the CTI is unable to process the agent after a communication fault, and a total breakdown occurs in the call center services before the services between the CTI and the switch are restored.

### Embodiment 2

This embodiment provides an agent processing method, where an agent state is managed by a CTI and a switch at the same time, and the CTI is unable to process the agent when communication disconnection occurs between the CTI and the switch, but a call center may still process the agent through the switch.

The call center in this embodiment includes, but is not limited to, the CTI and the switch. The switch includes a SoftACD device and the agent registered on the switch, and the SoftACD device has a call management function capable of switching a call reaching the switch to a correct agent. The switch further includes an agent management function module in addition to the SoftACD device. It should be noted that, the switch in the embodiment of the present invention may be specifically a SoftACD device.

In this embodiment, initialization of the CTI and the switch in the call center is described first, and then a process from a normal operation state of the CTI and the switch to communication disconnection between the CTI and the switch, and how the call center processes the agent after the disconnection through the switch are described.

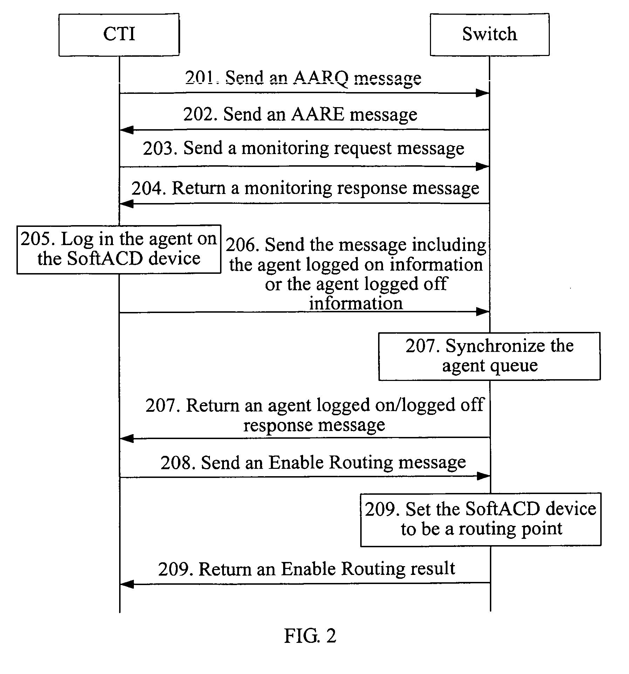

FIG. 2 is a flow chart of initialization of a call center according to Embodiment 2 of the present invention. Referring to FIG. 2, the initialization process includes the following:
201: The CTI sends an AARQ (Application Association ReQuest, application association request) message to the switch.

The CTI requests to create a connection with the switch through the AARQ.

202: The switch sends an AARE (Application Association Response, application association response) message to the CTI.

The AARE message is a response message for creating the connection.

The connection is created successfully between the CTI and the switch through the contents described in 201 and 202.

203: The CTI sends a monitoring request message to the switch to request to monitor an agent in the switch.

The monitoring request message sent by the CTI to the switch is Monitor Start_req, so as to request to monitor the agent in the switch. The CTI may send multiple monitoring request messages to the switch to request to monitor multiple agents.

204: The switch returns a monitoring response message to the CTI.

The monitoring response message returned by the switch to the CTI is Monitor Start_rsp.

205: A mapping relation between the agent and the SoftACD device is obtained through configuration of an agent management system in the CTI.

The CTI may know which SoftACD devices exist in the switch, may obtain the mapping relation between the agent and the SoftACD device through the configuration of the agent management system in the CTI, and may manage an agent state through the agent management system.

206: The CTI sends a message including agent logged on information or agent logged off information to the switch.

The message may be specifically a Set Feature (Agent Logged On) message with an extended field, where the Agent Logged On is the information instructing the switch to log the agent on the SoftACD device in the switch, and the CTI instructs the switch to log the agent on the SoftACD device through the message. It may be understood that, Agent Logged Off may indicate that the agent is logged off from the switch, and the Agent Logged On is taken as an example in the following.

Optionally, the CTI may further instruct the switch to log the agent on the SoftACD device by extending other messages in the CSTA. The specific examples are as follows.
(1) In the Monitor Start message, the field is extended to instruct to log the agent on the SoftACD device in the switch, for example, Monitor Start (Agent Logged On).
(2) A new message is added to instruct to log the agent on the SoftACD device in the switch.
(3) The information indicating which agents can be logged on the SoftACD device in the switch is carried through Set Feature (Enable Routing) message.

In the embodiment of the present invention, as long as a message is defined by the CTI and the switch, a function of logging on/off the SoftACD device in the switch can be implemented through the message.

207: The switch synchronizes an agent queue of the switch according to agent logged on information in the message or agent logged off information in the message.

It should be noted that, the agent queue may include a record of the logged-on agents, and may further include the mapping relation between the agent and the SoftACD device in the switch, and an agent state such as agent busyness or agent idleness.

The synchronizing includes: adding an agent record in the agent queue of the switch according to the agent logged on information, or deleting the agent record from the agent queue of the switch according to the agent logged off information.

Further, in 207, the switch returns a message of adding the agent record/deleting the agent record in the agent queue corresponding to the agent logged on information or the agent logged off information to the CTI.

The message received by the switch is, for example, the Set Feature (Agent Logged On) message, which is described in the following.

The switch adds the agent record in the agent queue of the switch according to the Agent logged on information in the Set Feature message sent by the CTI, and specifically, the switch may log the agent on the corresponding SoftACD device in the switch according to the message. The "corresponding" is implemented through the message sent by the CTI, and the message includes the mapping relation between the agent and the SoftACD device in the switch, that is, the CTI clearly notifies the switch that which agent is logged on which SoftACD device in the message.

A principle of the agent logged off is the same as the foregoing description, which is not described here again.

208: The CTI sends an Enable Routing message to the switch.

The Enable Routing message sent by the CTI to the switch is specifically the Set Feature (Enable Routing). It should be noted that, the Set Feature may be collectively called the set feature message, and the message may be enabled to have many different functions by extending the field.

209: The switch receives the Enable Routing message, sets the SoftACD device to be a routing point, and returns an Enable Routing result to the CTI.

After the route enabling, the CTI may log the agent on/off the routing point, and when a call reaches the switch, the routing point may switch the call to a correct agent.

The CTI and the switch may obtain the agent logged on information or agent logged off information through the foregoing initialization process, and in this way, the switch has the same agent queue as that of the CTI. The agent queue may reflect the agent logged on information or agent logged off information, which specifically includes: which agent is logged on which SoftACD device or which agent is logged off which SoftACD device. For example, in 205, if an internal agent management system of the CTI logs the agent off the SoftACD device, the CTI may send a message to the switch in 206, and the message includes the information instructing the switch to log the agent off the SoftACD device, for example, the instruction message may be specifically the Set Feature (Agent Logged Off) message, the CTI instructs the switch to log the agent off the SoftACD device through the message, and since the Set Feature (Agent Logged Off) message includes the mapping relation between the agent and the SoftACD device, the switch may log the agent off the corresponding SoftACD device in 207, and returns an agent logged off response message to the CTI, where the message indicates that the agent is logged off successfully.

After the call center implements the initialization, when link connection of the CTI and the switch is normal, the CTI performs agent distribution. Since the agent is registered on the switch, the switch may further obtain the information indicating that the agent is logged on/off the SoftACD device through the initialization setting process, and the switch may synchronize the agent queue of the switch through the information. Therefore, when the status which is agent logged on or logged off is changed, the switch is enabled to synchronously update the agent queue of the switch through the setting, and ensures that the updated agent queue is consistent with the agent queue of the CTI.

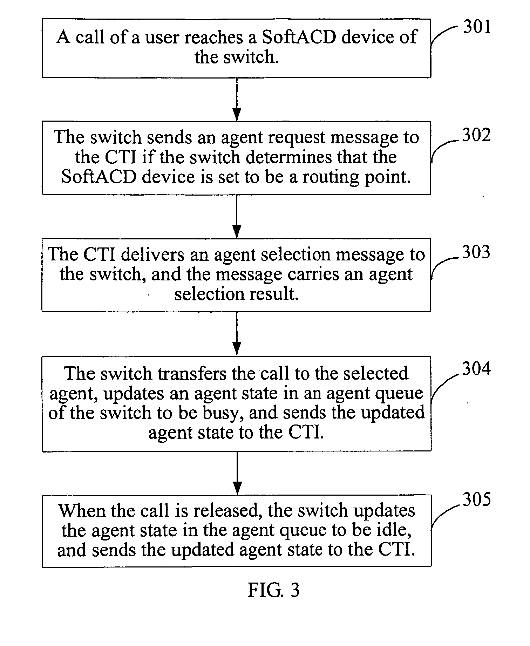

FIG. 3 is a flow chart of an agent processing method when the call center is in a normal operation state according to Embodiment 2 of the present invention. Referring to FIG. 3, the normal operation state is that a switch requests agent distribution from a CTI after a call reaches the switch, and the method includes the following.

301: A call of a user reaches a SoftACD device of the switch.

302: The switch sends an agent request message to the CTI if the switch determines that the SoftACD device is set to be a routing point.

The switch sends a Route Request message to the CTI to request the agent distribution.

303: The CTI delivers an agent selection message to the switch, and the message carries an agent selection result.

The agent selection message delivered by the CTI to the switch is Route Select, and the message carries the agent selection result.

304: The switch transfers the call to the selected agent, updates an agent state in an agent queue of the switch to be busy, and sends the updated agent state to the CTI.

When the call reaches the switch, the switch transfers the call to the selected agent, and the agent state is busy. The switch updates the agent state in the agent queue, and the agent state is busy at this time.

It should be noted that, in the agent queue, each agent may have a record reflecting the agent state, and the agent state may not only include agent busyness, but also include agent idleness. When the call is released, the agent state is idle.

Further, the switch reports an event report message to the CTI, and the event report message includes the updated agent state. The event report message may be Event Report, and the CTI is reported that the updated agent state is busy at this time through the message.

305: When the call is released, the switch updates the agent state in the agent queue to be idle, and sends the updated agent state to the CTI.

The switch may send the updated agent state to the CTI through a Clear Connet message, and the agent is in an idle state at this time.

It can be known from the above content that, when communication between the CTI and the switch is normal, the CTI performs the agent distribution.

When link disconnection between the CTI and the switch occurs due to an abnormal condition, the switch finds the link disconnection through timing detection, and then clears all the information related to the link, where the information includes routing point information and monitoring information of an agent device. At this time, the routing point creating connection with the link is converted into a common SoftACD device. However, since the agent queue synchronized by the switch according to the agent logged on information or agent logged off information may not be lost during system initialization, when the CTI instructs the switch to log on the agent through a message before, the logged-on agents are not logged off.

When a call comes into the SoftACD device in the switch, the switch finds that disconnection between the SoftACD device and the CTI occurs, and the switch may process the call reaching the switch according to the agent queue stored in the switch.

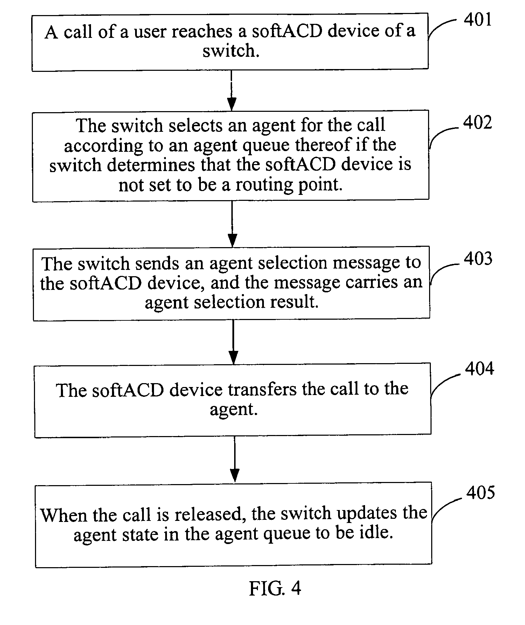

FIG. 4 is a flow chart of an agent processing method when the call center is in a fault state according to Embodiment 2 of the present invention. As shown in FIG. 4, the method includes the following:
401: A call of a user reaches a SoftACD device of a switch.
402: The switch selects an agent for the call according to an agent queue of the switch if the switch determines that the SoftACD device is not set to be a routing point.

The switch finds that link disconnection between a CTI and a switch occurs through timing detection, determines that the SoftACD device which the call reaches is not set to be the routing point, and distributes the agent for the call according to the agent queue of the switch. Since the agent queue may include a mapping relation between the agent and the SoftACD device in the switch, and may also include an agent state such as agent busyness or agent idleness.

403: The switch sends an agent selection message to the SoftACD device, and the message carries an agent selection result.

404: The SoftACD device transfers the call to the selected agent.

The SoftACD device transfers the call to the selected agent, and meanwhile, the switch updates the selected agent state in the agent queue to be busy.

405: When the call is released, the switch updates the selected agent state in the agent queue to be idle.

It can be known from the above content that, when communication disconnection between the CTI and the switch occurs, the switch performs the agent processing.

When connection between the CTI and the switch is restored at a certain moment, the CTI re-monitors the agent, and the agent is re-logged on the CTI (that is, the CTI re-obtains the information indicating that the agent is logged on the SoftACD device through an internal agent management system). Furthermore, the CTI may send a message to the switch again, the message includes agent logged on information or agent logged off information, and the switch synchronizes the agent queue according to the agent logged on information or the agent logged off information. A principle here is the same as the principle in 206 and 207, and is not described here again. It should be noted that, if the agent in the switch is logged on during an initialization process before the link fault, the switch may not repeat the logged on operation. The CTI resends an Enable Routing message to the switch and sets the SoftACD device to be a routing point. After a call reaches the SoftACD device, if the switch determines that the SoftACD device is set to be the routing point, the switch requests the agent distribution from the CTI, and processes the call reaching the switch according to the distributed agent, that is, a normal agent distributing process is restored.

In the embodiment of the present invention, the switch synchronizes the agent queue of the switch according to the agent logged on information or the agent logged off information, monitors the state between the switch and the CTI, and processes the call reaching the switch according to the agent queue stored in the switch when the connection state between the switch and the CTI is disconnected, thereby solving the problem that the CTI is unable to process the agent after a communication fault, and a total breakdown occurs in the call center services before the services between the CTI and the switch are restored. When the connection state between the switch and the CTI is normal, the switch enables the agent queue of the switch to be consistent with the agent queue of the CTI by updating the agent state in the agent queue, and therefore, the agent can be correctly selected for the call reaching the switch.

### Embodiment 3

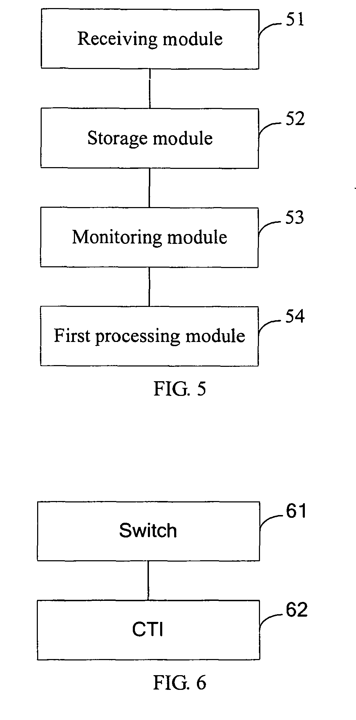

FIG. 5 is a schematic structure diagram of a switch according to Embodiment 3 of the present invention. Referring to FIG. 5, the switch may be specifically a SoftACD, and includes: a receiving module 51, a storage module 52, a monitoring module 53 and a first processing module 54.

The receiving module 51 is configured to receive a message sent by a CTI, where the message includes agent logged on information or agent logged off information.

The message including the agent logged on information or the agent logged off information may be one of the following messages: a Set Feature message with an extended field, a monitoring message with an extended field, and a newly added message.

The storage module 52 is configured to synchronize an agent queue according to the agent logged on information or the agent logged off information.

The monitoring module 53 is configured to monitor a connection state between the switch and the CTI.

The first processing module 54 is configured to process a call reaching the switch according to an agent state in the agent queue stored in the storage module 52 when the connection state between the switch and the CTI is disconnected.

Further, the switch may also include an update module, configured to update the agent state in the agent queue stored in the storage module 52, and send the updated agent state to the CTI when the call reaches the switch in the case of a normal connection state between the switch and the CTI or when the call is released in the case of a normal connection state between the switch and the CTI.

Further, the switch may also include a second processing module, configured to request agent distribution from the CTI and process the call reaching the switch according to the distributed agent when the connection state between the switch and the CTI is restored from being disconnected to normal.

In the embodiment of the present invention, the switch synchronizes the agent queue of the switch according to the agent logged on information or the agent logged off information, monitors the state between the switch and the CTI, and processes the call reaching the switch according to the agent queue stored in the switch when the connection state between the switch and the CTI is disconnected, thereby solving the problem that the CTI is unable to process the agent after a communication fault, and a total breakdown occurs in the call center services before the services between the CTI and the switch are restored.

It should be noted that, in actual application scenarios, the modules of the switch are not limited to the foregoing framework, and the foregoing modules may be combined with a SoftACD in the switch. For example, in the prior art, the switch includes the SoftACD, and after the CTI sets the SoftACD in the switch to be a routing point, when a call reaches the routing point, the switch requests the agent distribution from the CTI, and the SoftACD in the switch may transfer the call to the agent. Therefore, the SoftACD has a call management function.

On the basis of the call management function of the SoftACD, in the actual application process of the embodiment of the present invention, the SoftACD may include the receiving module 51 and the first processing module 54, where the receiving module 51 is configured to receive the message including the agent logged on information or the agent logged off information sent by the CTI, and the first processing module 54 is configured to process the call reaching the switch according to the agent state in the agent queue stored in the storage module 52 when the connection state between the switch and the CTI is disconnected. Under such a framework, the switch may also include: the storage module 52, configured to synchronize the agent queue according to the agent logged on information or the agent logged off information; and the monitoring module 53, configured to monitor the connection state between the switch and the CTI.

### Embodiment 4

This embodiment provides a call center. As shown in FIG. 6, the call center includes a switch 61 and a CTI 62.

The switch 61 is configured to receive a message sent by the CTI 62 where the message includes agent logged on information or agent logged off information, synchronize an agent queue of the switch 61 according to the agent logged on information or the agent logged off information, monitor a connection state between the switch 61 and the CTI 62, and process a call reaching the switch 61 according to an agent state stored in the switch 61 when the connection state between the switch 61 and the CTI 62 is disconnected.

The switch 61 includes:
a receiving module, configured to receive a message sent by the CTI, where the message includes the agent logged on information or the agent logged off information;
a storage module, configured to store an agent state;
a monitoring module, configured to monitor the connection state between the switch and the CTI; and
a first processing module, configured to process a call reaching the switch according to the agent state stored in the storage module when the connection state between the switch and the CTI is disconnected.

The CTI 62 includes an agent distribution module, configured to distribute the agent for the switch when the connection state between the switch and the CTI is restored from being disconnected to normal.

A switch in a call center provided by the embodiment of the present invention may include, but is not limited to, any one of the foregoing types of switches.

In the call center provided by the embodiment of the present invention, the switch synchronizes the agent queue of the switch according to the agent logged on information or the agent logged off information, monitors the state between the switch and the CTI, and processes the call reaching the switch according to the agent queue stored in the switch when the connection state between the switch and the CTI is disconnected, thereby solving the problem that the CTI is unable to process the agent after a communication fault, and a total breakdown occurs in the call center services before the services between the CTI and the switch are restored. The CTI in the call center may further distribute the agent for the switch when the connection state between the switch and the CTI is restored from being disconnected to normal.

The word "receiving" in the embodiment of the present invention may be understood as actively obtaining the message from other modules or receiving the message sent from other modules.

It may be understood by persons skilled in the art that, the accompanying drawings are merely schematic diagrams of embodiments, and modules or processes in the accompanying drawings are not necessarily required in implementing the present invention.

It may be understood by persons skilled in the art that, modules in a device according to an embodiment may be distributed in the device of the embodiment according to the description of the embodiment, or be correspondingly changed to be disposed in one or more devices different from this embodiment. The modules of the above embodiment may be combined into one module, or further divided into multiple sub-modules.

The sequence numbers of the above embodiments of the present invention are merely for the convenience of description, and do not imply the preference among the embodiments.

A part of the steps in the embodiments of the present invention may be implemented by using software, and the corresponding software program may be stored in a readable storage medium, such as an optical disk or a hard disk.

The embodiments of the present invention may be implemented through software, and the corresponding software may be stored in a readable storage medium, such as a computer hard disk, an optical disk or a floppy disk.

The above descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A method for connecting associated calls between networks, comprising:
when receiving a first call from a first network, storing, by a first service execution system, feature information of the first call in a service data unit, generating a routing signal, and routing the first call to a second network according to the routing signal to trigger a second call on the second network; and
receiving, by the first service execution system, the second call that is transferred by a second service execution system according to the feature information of the first call stored in the service data unit, and performing connection processing on the first call and the second call.

2. The method according to claim 1, wherein the feature information of the first call comprises a session identifier of the first call, association information used to identify an association relation between the first call and the second call, and a corresponding relation between the session identifier of the first call and the association information.

3. The method according to claim 2, wherein the transferring, by the second service execution system, the second call to the first service execution system according to the feature information of the first call stored in the service data unit comprises:
obtaining, by the second service execution system, the association information from the second call;
querying, by the second service execution system, the session identifier of the first call in the service data unit using the obtained association information as an index; and
modifying, by the second service execution system, a session identifier of the second call into the found session identifier of the first call, and transferring service logic of the second call to service logic of the first call in the first service execution system.

4. A Service Broker system, comprising: a service data unit and a first service execution system, wherein
the first service execution system is configured to store feature information of a first call in the service data unit when the first call from a first network is received, generate a routing signal, route the first call to a second network according to the routing signal to trigger a second call on the second network, receive the second call that is transferred by a second service execution system according to the feature information of the first call stored in the service data unit, and perform connection processing on the first call and the second call; and
the service data unit is configured to store the feature information of the first call.

5. The Service Broker system according to claim 4, wherein the service data unit is of a global type.

6. The Service Broker system according to claim 4, wherein the first service execution system comprises:
a receiving module, configured to receive the first call from the first network;
a storage module, configured to store the feature information of the first call in the service data unit when the receiving module receives the first call;
a triggering module, configured to generate the routing signal, and route the first call to the second network according to the routing signal to trigger the second call on the second network when the receiving module receives the first call; and
a connection module, configured to receive the second call that is transferred by the second service execution system according to the feature information of the first call stored in the service data unit, and perform connection processing on the first call and the second call.

7. The Service Broker system according to claim 4, wherein the Service Broker system further comprises a second service execution system, configured to transfer the second call to the first service execution system according to the feature information of the first call stored in the service data unit when the second call from the second network is received.

8. The Service Broker system according to claim 7, wherein the feature information of the first call comprises a session identifier of the first call, association information used to identify an association relation between the first call and the second call, and a corresponding relation between the association information and the session identifier of the first call.

9. The Service Broker system according to claim 8, wherein the second service execution system comprises:
an obtaining module, configured to obtain the association information of the first call from the second call when the second call from the second network is received;
a querying module, configured to query the session identifier of the first call in the service data module using the association information obtained by the obtaining module as an index; and
a transferring module, configured to modify a session identifier of the second call into the session identifier of the first call found by the querying module, and transfer service logic of the second call to service logic of the first call in the first service execution system.

10. A Service Broker system, comprising: a service data unit and a second service execution system, wherein
the service data unit is configured to store feature information of a first call from a first network; and
the second service execution system is configured to transfer a second call to a first service execution system according to the feature information of the first call stored in the service data unit when the second call from a second network is received, wherein the feature information of the first call is stored in the service data unit when the first service execution system receives the first call from the first network.
